(19) Europäisches Patentamt
European Patent Office
Office européen des brevets

(11) **EP 4 559 881 A1**

(12) **EUROPEAN PATENT APPLICATION**

(43) Date of publication:
28.05.2025 Bulletin 2025/22

(21) Application number: 23211203.7

(22) Date of filing: 21.11.2023

(51) International Patent Classification (IPC):
*C03C 17/36* *(2006.01)*

(52) Cooperative Patent Classification (CPC):
**C03C 17/3626; C03C 17/3644; C03C 17/366**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **AGC Glass Europe**
**1348 Louvain-La-Neuve (BE)**

(72) Inventor: **RUITENBERG, Gerard**
**6041 Gosselies (BE)**

(74) Representative: **AGC Glass Europe**
**Technovation Centre**
**Intellectual Property Department**
**Rue Louis Blériot 12**
**6041 Gosselies (BE)**

(54) **NEW SEED FOR SILVER LAYER**

(57)    Low-e stack based on a silver layer which is deposited with a better crystal structure and a sufficient robustness thanks to the seed layer. The low-e stack of this invention is convenient for any type of coated substrate designed to improve thermal property, whatever the substrate is, as far as it is a transparent substrate and whatever the process steps involves, namely if a thermal treatment is requested or not.

## Description

### Technical Field.

The present invention relates to a seed layer that promotes the formation of a conductive silver layer with a good adhesion and a good performance in terms of conductivity (low resistivity). As a result, a coated article with an improved low-e stack is obtained.

### Background Art

Managing infrared light transmission through glazing is of great interest in terms of solar control and insulation. Nevertheless the visible light transmittance must at the same time be sufficiently high. This means that, using a coating to decrease infrared emissivity, implies that the coating must be highly selective regarding the transmittance at different wavelength. Practically the coating must be selective in such a way that most of the infrared part of the light is mainly reflected while the visible part of the light is mainly transmitted. Amongst the number of solutions already proposed, one might point at infrared reflecting metals such as gold, copper or silver. More particularly, current transparent low-emissivity or solar control layer stacks mainly include high infrared reflectance thin metal films, typically silver film. The visible transmission of layer stacks incorporating silver layers is generally enhanced thanks to interference effects by layering the silver layer between transparent dielectric films.

Very well-known silver low-emissivity or solar control layer stacks are deposited on transparent substrates, for example by means of the magnetron sputtering process. The silver is protected from chemical and mechanical attack by being embedded in other layers. Those other layers play different roles, such as for example the role of sacrificial layer, antireflective layer, barrier layer, seed layer, interference layer and so on.

ZnO is known from a very long time as a good seed layer for silver. Nevertheless as it is disclosed in BE1002992A3, certain stability problems related to the use of ZnO have been found. WO2000076930A1 discloses attempts to increase the ZnO-Ag robustness by adding other metals in the ZnO layer, as for example tin but adhesion problems between seed and silver layer still exist. Beyond the stability issue, to decrease the emissivity while keeping a high visible transmittance, remains an important challenge. This could be done by improving the silver conductivity while keeping its thickness to a small value. It is known that a better conductivity of silver is obtained with a better crystallinity. A thermal treatment is often used to improve the silver crystallinity after film deposition. EP0803481A1 suggests improving the crystallization during deposition thanks to an amorphous base film below the seed layer. WO2014093779A1 also suggests to promote the good structure of the seed layer by appropriate choice of the underneath layer (base layer), which is amorphous. The base layer influences the structure of the seed layer and as a result, also the structure of the silver layer.

All properties and characteristics (optical, thermal and durability) may, to a certain extent, be antagonistic to each other. For example, lower emissivity may be reached through a thicker silver layer but a thicker silver layer will result in a loss of transmittance. Furthermore heat treatment such as tempering or bending for example, is generally performed at very high temperature (above 500°C) and may have different effects on the low emissivity stack. A sacrificial layer that is used to protect the silver can, for example, be oxidised and this results in an increase in transmittance. Also the structure of a silver layer may change during a heat treatment, its crystallisation may increase and this results in a decrease of the emissivity. Both effects may be desirable but not all stacks are heat treated and moreover, the heating may affect the robustness of the stack. For example, it was found that tempering may degrade the strength of a ZnO/Ag interface and cause adhesion issues. Indeed after tempering, point defects can be seen under the electron microscope because of delamination of the ZnO/Ag interface.

All this shows that a balance must be found between the low-emissivity, the transparency and both chemical and mechanical resistance of the layer stack. There is still a need for improvement and to propose a layer stacks that is resistant against delamination issues and / or reaches low emissivity and / or has good optical performances, in particular a high visible light transmittance. Such a stack would not need to be heat treated to reach high performance, but might be heat treated.

The coated article of the invention may be incorporated to any kind of application that request low emissivity and high visible transmittance. The substrate may be any kind of transparent substrate, even substrate that cannot be heated at a high temperature as far as its transparency is sufficient.

### Object of the invention

The objective of the invention is to provide a low-e stack based on a silver layer which is deposited with a better crystal structure and a sufficient robustness thanks to a good adhesion to the seed layer. The low-e stack of this invention is convenient for any type of coated substrate designed to improve thermal property, whatever the substrate is, as far as it is a transparent substrate and whatever the process steps involves, namely if a thermal treatment is requested or not. The scope of the invention is limited only by the claims, description is made to provide a good understanding of the invention and to help the man in the art to better understand the limits of the claimed scope.

**Summary of invention**

The inventor has found that conductivity and robustness may be improved with a seed layer crystallized in wurtzite structure with a (002) crystallographic orientation or in zincblende structure with a (111) crystallographic orientation, such that the seed layer is better matching the silver lattice. Advantageously, the seed layer ends with a 6-fold in-plane coordination, like the wurtzite (002) or the zincblende (111), to match the silver's fcc (111) close-packed plane, where the nearest neighbour distance in the plane at both sides of the seed/silver interface is almost the same. Practically, according to the invention, the material of the seed layer is such that the distance mismatch across the seed layer/silver layer interface, is strictly lower than 7%, preferably lower than 5% and more preferably lower than 3%. For the rest of the description, this value will be named "the silver-seed mismatch value" and is defined below (§43).

Accordingly, despite it is possible that during the deposition process, the silver layer initially forms disjoint islands, the final silver layer will be a continuous film with a good adherence with the seed layer thanks to the similar crystal structure of the seed layer and the silver layer.

The inventor has observed that with a seed layer, corresponding to the above condition, it was possible to obtain a silver layer that has a low resistivity, even with a low thickness and with a rather good adhesion.

The present invention thus concerns a coated article comprising the sequence:

"a substrate, a seed layer and a silver layer"
wherein the seed layer is below and in direct contact with the silver layer and,
wherein the seed layer is characterized by a wurtzite structure with (002) crystallographic orientation or by a zincblende structure with a (111) crystallographic orientation and,
wherein the silver is characterized by an in-plane nearest neighbour distance ($d_{NN}$) of 2.89 Å, and
wherein the mismatch value across the seed layer /silver layer interface is strictly lower than 7%, preferably lower than 5% and more preferably lower than 3%.

According to this invention, the silver layer is characterized by a, b and c lattice parameters that are equal to 4.09 Å, which corresponds to an in-plane nearest neighbour distance of 2.89 Å for the atoms in the (111) plane.

According to this invention, the silver layer has a fcc structure with (111) crystallographic orientation.

According to an alternative embodiment of the present invention, the silver layer grows as hcp structure onto the seed.

The examples which are given in the table 1 have been given for the purpose of illustrating the lattice parameters of some compounds and are, by no way, a limitation of the invention. Also their use is limited to deposition conditions and optical parameters. The main feature of this invention is the limitation to the mismatching between the nearest neighbour distances ($d_{NN}$) at each side of the seed/Ag interface in the in-plane. It is noted that the mismatch of the "c" lattice parameter is irrelevant for the seed layer/silver interface even if it could play some other role.

Table 1: Some wurtzite structures and their mismatch to Ag's fcc(111) interface

| material | structure | orientation | lattice parameters, Å | | | dNN, A (in-plane) | mismatch value (%) |
|---|---|---|---|---|---|---|---|
| | | | a | b | c | | |
| Ag | fcc | (111) | 4,09 | 4,09 | 4,09 | 2,89 | |
| ZnO | wurtzite | (002) | 3,25 | 3,25 | 5,20 | 3,25 | 11,08 |
| AlN | wurtzite | (002) | 3,11 | 3,11 | 4,98 | 3,11 | 7,07 |
| BN | wurtzite | (002) | 2,54 | 2,54 | 4,20 | 2,54 | 13,78 |
| $Al_{0,62}B_{0,38}N$ | wurtzite | (002) | 2,89 | 2,89 | 4,68 | 2,89 | 0 |

According to an embodiment of the present invention, the seed layer is a metal, an alloy, a semimetal or a mixture thereof.

According to an embodiment of the present invention, the seed layer is a nitride or an oxide of a metal, an alloy or a semimetal, or any combination thereof.

According to an embodiment of the invention the seed layer is a nitride or an oxide of a metal, an alloy or a semimetal, incorporating another element such as a metal.

According to a particular embodiment of the invention, the seed layer comprises an element from the boron group or a nitride of an element from the boron group (group 13), as for example aluminium nitride. Here 'based on' means that seed layer comprises at least 50 atomic % of the nitride. Advantageously the seed layer of this invention, based on aluminium nitride, comprises another element that combine with the aluminium nitride in a way to adjust the lattice parameters of the crystal that compose the seed layer. As a result, the mismatch value of the seed layer with silver is decreased. The aluminium nitride alone is not convenient for the purpose of this invention because the in-plane nearest neighbour distance at the interface for AlN ("$d_{NN}$") is 3.11 Å compared to 2.89 Å for silver. The mismatch value is thus too high (7.1%).

According to a particular embodiment of the invention, the seed layer is a mixed nitride of aluminium and boron and is characterised by a ratio AlB comprised between 4/6 and 8/2. Considering the lattice parameters, the mixed nitride is approaching the silver lattice parameters, allowing a better match.

According to a particular embodiment, the seed layer is $Al_{0.62}B_{0.38}N$. This particular candidate, which is not the only one, has the particularity to have the same crystal structure as ZnO with the advantage of a very good lattice-match-to silver.

According to any embodiment of the invention, the silver layer has a physical thickness comprised between 5 and 20 nm. Preferably the silver layer has a thickness of at least 6.5 nm, preferably at least 6 nm. A low silver thickness is preferred for a high visible light transmittance.

According to any embodiment of the invention, the seed layer has a physical thickness which is at least 0.3 nm, preferably at least 0.8 nm and more preferably at least 1.5 nm. This lower limit depend on the seed material and may be adapted to have sufficient crystallisation. The upper thickness limit is mainly fixed in relation with process parameters, cost and optical properties of the stack, namely to keep light absorption sufficiently low. Depending the choice of the seed layer, this thickness may also be adjusted for durability reasons.

According to any embodiment of the invention, the seed layer has properties that allow enough visible light transmittance for the requested thickness. Practically, the stack with the seed layer of the invention has a visible light transmittance that is not more than 4 %, preferably not more than 2 % less than the visible light transmittance of the same stack comprising ZnO as a seed layer. This difference is the absolute difference between the visible light transmittance values

According to any embodiment, the coated article of the invention is characterized by a resistivity that is at most 5 $\mu\Omega$.cm, preferably at most 4 $\mu\Omega$.cm and more preferably at most 3.3 $\mu\Omega$.cm.

According to any embodiment of the invention, the coating comprises dielectric layers deposited under and above the silver layer. The dielectric layers may play any known role as for example protection or interferential adjustment. The man skilled in the art is able to choose the nature and thickness of those dielectric layers in relation with the desired effect or property (for example optical property as colour).

In a particular embodiment, the dielectric layer under the seed layer is chosen for its ability to promote a good crystallisation of the seed layer. In this description, such a layer under and contacting the seed is named base layer.

According to any embodiment of the invention, the visible light transmittance of the coated article is at least 60%, preferably at least 65% and more preferably at least 70%.

According to any embodiments of the invention, the complete low-e stack may have more than one silver layer and at least one of the silver layers is deposited above the seed layer of the invention.

According to a particular embodiment of the invention, the low-e stack comprises more than one silver layer and each silver layer is deposited above and in contact with a seed layer of the invention.

According to any embodiment of the invention, the coated substrate comprises a transparent substrate and a stack of thin layers comprising n silver layers and n+1 dielectric films, n is $\geq$ 1, each silver layer being surrounded by 2 dielectric films. A dielectric film comprises at least one dielectric layer. Other layers such as protecting layer, barrier layer or any layer requested for the purpose of the particular article may be included in the stack in a very well-known manner.

Advantageously, the coated article of the invention is chemically and mechanically durable. More particularly, the coated article of the invention passes successfully the durability tests according to the standard EN 1096-3 - 2012E.

More particularly, the adhesion of the coating is assessed through tape test method and the chemical durability through the neutral salt spray test and the abrasion resistance through a brush test".

According to any embodiment of the invention, any deposition process can be considered provided the resulting seed layer has the required crystal structure. The silver layer can then be deposited in a very well-known way by the man of the art.

A preferred deposition process is based on a physical vacuum deposition technology, in particular magnetron sputtering. Nitrides are deposited using a metallic target under a nitrogen atmosphere or mixed Ar/N2 atmosphere. Oxides are deposited from a metallic target under an oxygen atmosphere or a mixed Ar/O2 atmosphere. Alternately, dielectrics may be deposited form ceramic targets.

## Description

This and other aspects of the present invention will now be described with reference to details discussed below. The following description is illustrative of the disclosure and is not to be construed as limiting the disclosure.

Definitions

- As used herein, the term comprising or comprise, are to be construed as being inclusive and open ended, and not exclusive. Specifically, when used in the specification and claims, the terms "comprises" and "comprising" and variations thereof mean the specified features, steps or components are included. These terms are not to be interpreted to exclude the presence of other features, steps or components,

- for the sake of clarity, when using terms like "below", "above", "lower", "upper", "first" or "last" herein, it is always in the context of a sequence of layers starting from the glass below, going upward, further away from the glass. Such sequences may comprise additional intermediate layers, in between the defined layers, except when a direct contact is specified

- As used herein, the term transparent means that the visible light transmittance is at least 60%, preferably at least 65% and more preferably, at least 70%. Visible light transmittance is measured according to the EN 410 - 2011E (Illuminant D65, 2° observer angle is used).

- For the entire description, a seed layer has to be understood as a special layer on which a silver layer is deposited.

- When a sentence is speaking about a crystal state, one must be conscious that the material may be not completely crystallized.

- As used herein, by "in-plane nearest neighbour distance", one must understand the distance between the centre of the atoms in the plane which is part of the interface between the seed and the silver. The man of the art knows how to calculate this distance based on the crystal structure and lattice parameters.

- As used herein, speaking about near infrared referred to the part of light having a wavelength between 780 to 2500 nm.

- As used herein, the term substrate designates the transparent support on which the low-e stack is deposited. Advantageously, the substrate is amorphous. This support or substrate may be of any nature convenient for the purpose involving the low-e stack of the invention. For example and not in a limiting way, the support may be a glass substrate, as for example a soda lime glass substrate or any type of glass. The support may also be of polymeric nature like as for example and not in a limiting way methyl polymethacrylate or any type of flexible film. The substrate, whatever it is, may have a thickness of at least 0.5 mm, preferably at least 1.5 mm and more preferably at least 3 mm and at most 8 mm, preferably at most 7 mm and more preferably at most 6 mm, as far as it remains transparent. When the substrate is a clear glass, it means that the iron content expressed in weight percent of $Fe_2O_3$ which is at most 0.1% while for an extra clear glass, the iron content is at most 0.015%.

Unless otherwise defined, all technical and scientific terms used herein are intended to have the same meaning as commonly understood to one of ordinary skill in the art.

Unless otherwise defined a thickness is a geometrical thickness.

The crystallographic orientation and the lattice parameters are determined by X-ray diffraction (XRD)

By silver-seed mismatch value, we hereby mean the absolute number calculated from the relative difference in the in-plane nearest neighbour distances ($d_{NN}$) at each side of the seed/Ag interface, related to the seed's $d_{NN}$. For example, between ZnO ($d_{NN} = a = 3.25$ Å in the (002) plane) and Ag ($d_{NN} = a = 2.89$ Å in the (111) plane), the mismatch value is thus (3.25 - 2.89) / 3.25 x 100 = 11%. The silver-ZnO mismatch value is thus equal to 11%.

$$(|d_{NN}(seed) - d_{NN}(Ag)|) / d_{NN}(seed) * 100$$

The emissivity is measured in accordance with the European norm EN 12898.

The resistance per square ("sheet resistance"), expressed in ohms per square ($\Omega/\square$), measures the electrical resistance of thin films. The sheet resistance measurement may be made through the four-probe test method. Four sharp probes (usually with Zn coated tips) are placed on a flat surface of the material to be measured, current is passed through the two outer electrodes, and the floating potential if measured across the inner pair. As is well known, lower sheet resistances indicates lower emissivity in silver based coatings. The resistivity of the silver layer is calculated by multiplying the sheet resistance with the layer thickness, and generally expressed in $\mu$Ohm.cm.

For the durability, tests have been made in accordance with the norm EN 1096-3 (2012) corresponding to the class C (silver based coating).

Adhesion is assessed according to the standard ASTM D 3359 - 1997E and the European norm EN 1096-2-2012E. The Neutral salt spray as described in the 1096-2 norm has a duration adapted to 2 days and the abrasion resistance, from the same norm, requested 50 strokes.

**Description of embodiments / examples**

The invention will be illustrated by some examples but one must understand that those examples are by no way limiting the scope of the invention.

The examples are coated articles comprising a low-e stack deposited on a 4 mm thick monolithic extra clear glass. The low-e stack of the examples has the following general structure:

GL / base layer / seed layer / Ag / barrier / dielectric

The table 2, gives the more precise structure for each example, the geometrical thicknesses of the layers are the values in brackets and are given in nm. Examples 1 is a comparative example (bad mismatch value).

Table 2

| examples | Base layer | Seed layer | silver | barrier | dielectric |
|---|---|---|---|---|---|
| 1 | ZSO(25) | ZnO (5) | Ag(17) | ZnO(7) | ZSO(22)/SiN(22)/TZO(3) |
| 2 | ZSO(25) | AlBN (5) | Ag(17) | ZnO(7) | ZSO(22)/SiN(22)/TZO(3) |
| 3 | ZSO(20) | AlBN(10) | Ag(17) | ZnO(7) | ZSO(22)/SiN(22)/TZO(3) |

Deposition of dielectric and silver layers is performed following known methods. After current preparation process, the glass has been installed in a PVD coating unit. The zinc stannate layer (ZSO) is deposited in a pulverisation room equipped with a ZnSn target (alloy comprising 52% Zn and 48% Sn) and under a atmosphere comprising 20% of argon with 80% of oxygen. In a similar way, the ZnO layer is deposited from a zinc target. The silver layer is deposited from a silver target in a 100% argon atmosphere. Barrier layer is deposited from a ceramic target of ZnO doped with 2% Al, under an argon. For the second and third example, the seed layer has been deposited from a aluminium-boron (AlB) target under an atmosphere comprising pure nitrogen or a ratio of argon (e.g. 70 %) and nitrogen (e.g. 30 %) (ratios are based on volume flow). The atomic ratio of aluminium / boron in the AlB target is 62/38. The top dielectric, which is not critical to this invention, consists of a zinc stannate layer, followed by a silicon nitride layer and a TZO (titanium zirconium oxide) topcoat, for all three examples presented in Table 2.

The resulting properties of the stack from the examples and comparative examples have been measured. Values obtained are given in the table 3. All measures have been performed on the stack as deposited without any heat treatment.

Table 3: properties of the low-e stacks (without heat treatment)

| Examples | Ag-resistivity ($\mu\Omega\cdot$cm) | Visible Light transmittance (%) |
|---|---|---|
| 1 | 3.7 | 70 |
| 2 | 3.1 | 70 |
| 3 | 3.2 | 70 |

As can be seen, when the seed layer is a material that match the silver crystal characteristics, the resistivity is very low while the transmittance remains high. The mismatch value when the seed layer is $Al_{0.62}B_{0.38}N$ is zero (see table 1). To check the robustness of the stack, some tests have been performed, and the coated articles of the examples pass the durability test defined above (§46-47).

**Claims**

1.    A coated article comprising: a substrate, a seed layer and a silver layer

- wherein the seed layer is below and in direct contact with the silver layer
- wherein the seed layer is **characterized by** the wurtzite structure with a (002) crystallographic orientation or the zincblende structure with a (111) crystallographic orientation,
- wherein the silver layer is **characterized by** an in-plane nearest neighbour distance of 2.89 and
- wherein the mismatch value across the seed layer /silver layer interface is strictly lower than 7%, preferably lower than 5% and more preferably lower than 3%.

2.    The coated article of claim 1 wherein the silver layer has a fcc structure with (111) crystallographic orientation.

3.  The coated article of claim 1 wherein the silver layer has a hcp crystallographic structure.

4.  The coated article of any previous claim wherein the seed layer is a metal, an alloy, a semimetal or a mixture thereof.

5.  The coated article of any previous claim wherein the seed layer is a nitride or an oxide of a metal, an alloy or a semimetal, or any combination thereof.

6.  The coated article of any previous claim wherein the seed layer is a nitride or an oxide of a metal, an alloy or a semimetal, incorporating another element such as a metal.

7.  The coated article of any previous claim wherein the seed layer comprises an element from the boron group or a nitride of an element from the boron group.

8.  The coated article of any previous claim wherein the seed layer comprises aluminium nitride.

9.  The coated article of any previous claim wherein the seed layer is a mixed nitride of aluminium and boron.

10. The coated article of the previous claim wherein the mixed nitride of aluminium and boron is **characterised by** a ratio AlB comprised between 4/6 and 8/2.

11. The coated article of any previous claim wherein the silver layer has a thickness comprised between 5 and 20 nm.

12. The coated article of any previous claim wherein the silver layer has a thickness of at least 6.5 nm, more preferably at least 6 nm.

13. The coated article of any previous claim wherein the seed layer has a thickness of at least 0.3 nm, preferably at least 0.8 nm and more preferably at least 1.5 nm.

14. The coated article of any previous claim which is **characterized by** a resistivity that is at most 5 $\mu\Omega.cm$, preferably at most 4 $\mu\Omega.cm$ and more preferably at most 3.3 $\mu\Omega.cm$.

15. The coated article of any previous claim wherein the seed layer is deposited above a base layer.

16. The coated article of any previous claim wherein the visible light transmittance is at least 60%, preferably at least 65% and more preferably at least 70%.

17. The coated article of any previous claim comprising n silver layers, n being strictly greater than 1 and n+1 dielectric films, each silver layer being surrounded by 2 dielectric films.

18. The coated article of the previous claim wherein each silver layer is deposited directly and in contact with a seed layer of the invention.

Europäisches
Patentamt

European
Patent Office

Office européen
des brevets

## EUROPEAN SEARCH REPORT

Application Number

**EP 23 21 1203**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 785 714 B2 (INNOVATION & INFINITY GLOBAL C [TW]) 31 August 2010 (2010-08-31) * columns 2, 4; claims; figure 1 * | 1-3, 11-18 | INV. C03C17/36 |
| A | US 4 790 922 A (HUFFER RUSSELL [US]) 13 December 1988 (1988-12-13) * column 1; claims * | 4 | |
| A | US 4 985 312 A (FURUYA KOICHI [JP] ET AL) 15 January 1991 (1991-01-15) * columns 1,2; examples 6,7 * | 1-18 | |
| A | US 2017/096365 A1 (HENN CHRISTIAN [DE] ET AL) 6 April 2017 (2017-04-06) * paragraphs [0003], [0039]; claims * | 1-18 | |

TECHNICAL FIELDS
SEARCHED        (IPC)

C03C

The present search report has been drawn up for all claims

| Place of search | Date of completion of the search | Examiner |
|---|---|---|
| Munich | 12 April 2024 | Zandonà, Alessio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 1203

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | | Publication date | Patent family member(s) | | Publication date |
|---|---|---|---|---|---|
| US 7785714 | B2 | 31-08-2010 | NONE | | |
| US 4790922 | A | 13-12-1988 | NONE | | |
| US 4985312 | A | 15-01-1991 | DE | 3941046 A1 | 21-06-1990 |
| | | | JP | H0791089 B2 | 04-10-1995 |
| | | | JP | H02160641 A | 20-06-1990 |
| | | | US | 4985312 A | 15-01-1991 |
| US 2017096365 | A1 | 06-04-2017 | DE | 102015116644 A1 | 06-04-2017 |
| | | | FR | 3041955 A1 | 07-04-2017 |
| | | | JP | 2017075090 A | 20-04-2017 |
| | | | US | 2017096365 A1 | 06-04-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BE 1002992 A3
- WO 2000076930 A1
- EP 0803481 A1
- WO 2014093779 A1